# EUROPÄISCHE PATENTSCHRIFT

(11) **EP 3 616 304 B1**
(45) Veröffentlichungstag und Bekanntmachung des Hinweises auf die Patenterteilung: **23.06.2021**
(21) Anmeldenummer: 18720575.2
(22) Anmeldetag: 24.04.2018
(51) Int. Cl.: H02K 5/22, H02K 11/33, H02K 11/40, H02K 5/02, H02K 7/14, H02K 11/00

(54) **ELEKTRISCHE ANTRIEBSEINHEIT MIT EINEM GEHÄUSE**
ELECTRIC DRIVE UNIT WITH A HOUSING
UNITÉ D'ENTRAÎNEMENT ÉLECTRIQUE POURVUE D'UN CARTER

(30) Priorität: 28.04.2017 DE 102017207165
(43) Veröffentlichungstag der Anmeldung: 04.03.2020
(73) Patentinhaber: Robert Bosch GmbH, 70442 Stuttgart (DE)
(72) Erfinder: LOTT, Thomas, 77815 Buehl (DE); HANSEN, Sebastian, 77880 Sasbach (DE); MEIER, Helmut, 77871 Renchen (DE); CHENG, Fengmei, 76137 Karlsruhe (DE); STIEFEL, Tobias, 76534 Baden-Baden (DE)
(86) Internationale Anmeldenummer: PCT/EP2018/060448
(87) Internationale Veröffentlichungsnummer: WO 2018/197473

(56) Entgegenhaltungen:
- DE-A1-102012 222 683
- DE-A1-102014 206 536
- DE-A1-102016 210 785

## Beschreibung

### Stand der Technik

Die Erfindung betrifft eine elektrische Antriebseinheit mit einem Polgehäuse und einem Elektronikgehäuse nach der Gattung des unabhängigen Anspruchs. Aus der DE 10 2012 222 683 A1 ist eine elektrische Maschine bekannt geworden, die einen Poltopf aus Metall aufweist. Auf dem Poltopf ist axial ein Steckerbauteil aus Kunststoff angeordnet, auf dem wiederum ein Deckel aus elektrisch leitfähigem Material angeordnet ist. Dabei wird der Deckel mit dem Poltopf durch mehrere Stahlfederklammern verspannt, so dass die drei Bauteile gegeneinander fixiert sind. Dabei wirken die Stahlfederklammern mit dem Polgehäuse und dem Metalldeckel als EMV-Abschirmung, die ein Ein- und Ausstrahlen von störenden elektromagnetischen Wellen abschirmt. Die Montage solcher äußerer Matallfedern ist relativ aufwendig und bauraumintensiv. Außerdem besteht die Gefahr, dass diese Metallfeder korrodieren und dadurch deren Übergangswiderstand negativ beeinflusst wird. Zusätzlich kann um das Steckerbauteil ein Abschirmblech angeordnet werden, das elektrisch mit dem Deckel und/oder dem Poltopf verbunden ist. Die Herstellung und Montage eines solchen Abschirmbleches stellt jedoch ebenfalls einen erheblichen Mehraufwand dar. DE102014206536 offenbart eine elektrische Maschine mit einem Abschirmblech und einer Leiterplatine, wobei die Leiterplatine im Gehäuse zwischen einem metallischen Kühlkörper und und dem Abschirmblech angeordnet ist.

### Offenbarung der Erfindung

Die erfindungsgemäße elektrische Antriebseinheit mit den Merkmalen des unabhängigen Anspruchs hat demgegenüber den Vorteil, dass durch die Integration von Kontaktelementen innerhalb eines Kunststoffgehäuses eine elektromagnetische Abschirmung für die Elektronik innerhalb des Kunststoffgehäuses realisiert werden kann. Dabei ist das Kunststoffgehäuse axial zwischen einem Polgehäuse aus Metall und einem zweiten axialen Gehäuseteil angeordnet, das beispielweise als Kühldeckel aus Metall ausgebildet ist. Durch die Anordnung der Kontaktelemente im Inneren des ersten Gehäuseteils aus Kunststoff ist die Abschirmung vor äußeren Umwelteinflüssen wie Feuchtigkeit und einer damit verbundenen Korrosion geschützt. Durch die innenliegenden Kontaktelemente wird der benötigte Bauraum für die elektrische Antriebseinheit reduziert, da um das Gehäuse herum keine zusätzlichen Abschirmbleche angeordnet werden müssen.

Durch die in den Unteransprüchen aufgeführten Maßnahmen ergeben sich vorteilhafte Weiterbildungen und Verbesserungen der im Hauptanspruch angegebenen Merkmale. So können die Kontaktelemente bevorzugt als Einlegeteile ausgebildet werden, die beim Spritzgießen des ersten Gehäuseteils aus Kunststoff in die Werkzeugform eingelegt werden, um dann mit dem Kunststoff der Gehäusewand umspritzt zu werden. Dadurch werden die Kontaktelemente in einem Arbeitsschritt mit dem Herstellen des ersten Gehäuseteils fixiert. In einer alternativen Ausführung ist auch möglich, dass die Kontaktelemente als Einlegeteile ausgebildet werden, die erst nach dem Spritzgießen des Gehäuseteils in entsprechende Aufnahmen innerhalb des Gehäuseteils eingepresst werden. Beispielweise können die Einlegeteile als Biegestanzteile sehr kostengünstig hergestellt und sehr flexibel geformt werden.

Bei einer bevorzugten Ausführung ist im ersten Gehäuseteil aus Kunststoff eine Elektronikplatine mit verschiedenen elektronischen Bauteilen angeordnet. Diese Elektronikeinheit wird durch die erfindungsgemäßen Kontaktelemente innerhalb des ersten Gehäuseteils aus Kunststoff vor unerwünschter elektromagnetischer Störstrahlung geschützt. Gleichzeitig wird verhindert, dass die Elektronikeinheit störende elektromagnetische Strahlung an die Umgebung abgibt. Dazu verbinden die Kontaktelemente das Polgehäuse aus Metall elektrisch mit der Elektronikplatine. Die Elektronikplatine ist weiterhin mit dem zweiten axialen Gehäuseteil aus Metall elektrisch leitend verbunden. Durch diese Massekontaktierung der Elektronikplatine sowohl mit dem Polgehäuse als auch mit dem metallenen Gehäusedeckel wird praktisch ein Faraday'scher Käfig geschaffen, der die Elektronikplatine gegenüber EMV abschirmt.

In einer weiteren Ausführung kann das Kontaktelement auch das Polgehäuse mit dem zweiten Gehäuseteil aus Metall verbinden, ohne dabei mit der Elektronikplatine oder weiteren elektronischen Bauteilen kontaktiert zu sein. Dadurch wird ein Massekontakt zwischen den beiden Gehäusen aus Metall hergestellt, zwischen denen das erste Gehäuseteil aus Kunststoff angeordnet ist. Dadurch liegt vorteilhafter Weise der gesamte Gehäusedeckel aus Metall auf Masse, so dass beliebige elektronische Bauteile oder die elektronische Leiterplatte direkt elektrisch mit dem Gehäusedeckel aus Metall verbunden werden können, um einen Massekontakt zu realisieren.

In einer bevorzugten Ausführung ist das Kontaktelement einerseits elektrisch mit der Elektronikplatine verbunden und andererseits elektrisch mit dem Polgehäuse des Elektromotors kontaktiert. Dabei kann die elektrisch leitende Verbindung des Kontaktelements sowohl zur Elektronikplatine als auch zum Polgehäuse mittels unterschiedlicher Kontaktierverfahren, wie Löten, oder Schweißen, oder Bonden, oder Einpressen, oder mittels eines Federkontakts realisiert werden. Diese Kontaktiertungsmethode kann dabei an das Montageverfahren beispielsweise der Elektronikplatine im ersten Gehäuseteil angepasst werden, so dass keine weiteren zusätzlichen Montageschritte notwendig sind.

Besonders günstig kann der elektrisch leitende Kontakt des Kontaktelements zum Polgehäuse hin durch eine federnde Kontaktzunge realisiert werden, die sich in Axialrichtung zum Polgehäuse hin erstreckt. Dabei wird gleichzeitig mit der axialen Montage des ersten Gehäuseteils der axiale Federkontakt gegen die Innenwand des Polgehäuses federnd angedrückt, um den Massekontakt herzustellen. Dabei wird beispielsweise die Kontaktzunge durch die radiale Innenwand des Polgehäuses in Radialrichtung ausgelenkt, so dass die Kontaktzunge radial federnd an der radialen Innenwand des Polgehäuses anliegt.

Die elektrische Verbindung zwischen der Elektronikplatine und dem Gehäusedeckel aus Metall wird verfahrenstechnisch besonders günstig durch Kontaktfedern realisiert, die zuvor auf der Elektronikplatine kontaktiert und angeordnet sind. Dabei wird mit der axialen Montage des Gehäusedeckels gleichzeitig ein elektrischer Kontakt zwischen der Elektronikplatine und dem Gehäusedeckel hergestellt, indem die Kontaktfeder axial federnd gegen die Innenseite des Metalldecks gepresst wird. Dabei wird der Massekontakt zwischen dem Polgehäuse und dem Metalldeckel einerseits durch das Kontaktelement, das in die Gehäusewand des ersten Gehäuseteils eingefügt ist, hergestellt, und andererseits durch die Kontaktfeder zwischen der Elektronikplatine und dem Metalldeckel.

Gleichzeitig mit der Herstellung des elektrischen Kontakts zwischen dem Kontaktelement und der Elektronikplatine und/oder dem Gehäusedeckel können durch die Ausformung eines Zentrierpins am Kontaktelement gleichzeitig auch die Gehäuseteile zueinander ausgerichtet werden, um deren axiale Montage miteinander zu erleichtern. Entsprechend kann an der Elektronikplatine und/oder an der Innenseite des Gehäusedeckels eine Zentrieraufnahme angeordnet sein, in die der Zentrierstift bei der axialen Montage eingefügt wird. Dadurch entfällt die Anordnungen zusätzlicher Zentrierelemente für die axiale Montage der einzelnen Gehäuseteile.

Gemäß einer Ausführungsvariante der Erfindung ist das Kontaktelement als Gewindehülse ausgebildet, die fest in das Kunststoffgehäuseteil integriert ist. Beispielsweise kann die Gewindehülse ebenfalls als Einlegeteil beim Kunststoffspritzgießen in die Werkzeugform eingelegt werden. Wird anschließend das Polgehäuse mit einer Metallschraube mit dem ersten Gehäuseteil verbunden, indem die Schraube in die Gewindehülse eingeschraubt wird, wird dadurch auch ein Massekontakt zwischen dem Polgehäuse und der Gewindehülse aus Metall realisiert. Dadurch wird der Massekontakt vollständig in die Verbindungselemente des Polgehäuses mit dem ersten Gehäuseteil gelegt, wodurch keine zusätzlichen, separat gefertigten Kontaktelemente notwendig sind. Zur Ausbildung des Massekontakts zwischen dem Gehäusedeckel aus Metall zum ersten Gehäuseteil ist bevorzugt am Boden der Gewindehülse ein sich axial erstreckender Kontaktstift ausgebildet, der bei der axialen Montage des Gehäusedeckels direkt den Massekontakt zu diesem herstellt. Dadurch bildet die Gewindehülse mit deren angeformten Kontaktstift eine direkte elektrisch leitende Verbindung zwischen dem Polgehäuse und dem Gehäusedeckel. Bevorzugt kann der Kontaktstift wieder als Zentrierpin ausgebildet sein, der in eine korrespondierende Zentrieraufnahme an der Innenseite des Metalldeckels eingreift. Werden mehrere solcher Gewindehülsen in das erste Gehäuseteil aus Kunststoff integriert, bilden diese zusammen mit dem Polgehäuse und dem Gehäusedeckel aus Metall einen Faraday'schen Käfig zur EMV-Abschirmung der Elektronik.

Zur Verbindung des Polgehäuses mit dem ersten Gehäuseteil sind an einem Flansch des Polgehäuses Löcher ausgeformt, durch die hindurch die Schrauben in die korrespondierenden Gewinde der Gewindehülsen eingefügt werden. Sobald die Schrauben angezogen sind, bildet der Schraubkopf einen elektrisch leitenden Kontakt zwischen dem Flansch und der Gewindehülse, ohne dass eine zusätzliche elektrische Kontaktierung erforderlich ist.

Erfolgt die elektrische Kontaktierung des Kontaktelements zur Elektronikplatine und/oder zum Gehäusedeckel über einen Kontaktstift, kann dieser vorteilhafterweise in einer Zentrieraufnahme aufgenommen werden, die beispielweise als Speednut ausgebildet ist. Durch das Einfügen des Kontaktstifts in die Speednut-Vorrichtung wird einerseits ein zuverlässiger federnd anliegender elektrischer Kontakt hergestellt, und gleichzeitig auch eine zuverlässige Zentrierung der Gehäuseteile zueinander realisiert. Ist das zweite Gehäuseteil als Kühlkörper für die elektrische Antriebseinheit ausgebildet, so können elektronische Bauteile im Inneren des ersten Gehäuseteils direkt im thermischen Kontakt zur Innenseite des Gehäusedeckels (als zweites Gehäuseteil) angeordnet werden. Dabei können die Kontaktelemente gleichzeitig auch als Wärmeleiter dienen. Der Gehäusedeckel ist dabei beispielweise aus Aluminium gegossen, oder als Metallblech tiefgezogen. Über die an der Außenseite angeformten Kühlrippen kann die durch die Elektronik erzeugte Wärme schnell abgegeben werden. Das erste Gehäuseteil aus Kunststoff ist dabei gemäß einer Sandwich-Bauweise zwischen dem Gehäusedeckel und dem Polgehäuse aus Metall angeordnet. Dabei erstreckt sich dessen Anschlussstecker bevorzugt in Radialrichtung von der Rotorwelle weg.

Zur Verbindung des Polgehäuses mit dem ersten Gehäuseteil weist letzteres eine kreisförmige Umfangswand auf, die sich in Axialrichtung erstreckt. Diese zylindrische Umfangswand greift axial in den offenen Rand des Polgehäuses ein. Hierzu ist an der Mantelwand des Polgehäuses eine radiale Stufe ausgebildet, an deren radialen Innenwand die Umfangswand radial anliegt. Besonders vorteilhaft kann der federnde Kontakt zwischen dem Kontaktelement und dem Poltopf an einer zweiten radialen Stufe im Poltopf ausgebildet werden, wobei die axiale Kontaktzunge beim axialen Einschieben in diese zweite Stufe durch die Krümmung der Stufenwand radial ausgelenkt wird. Dadurch liegt der als Kontaktzunge ausgebildete Federkontakt mit ausreichender radialer Anpresskraft an der radialen Innenwand des Polgehäuses an, um eine Massekontakt auszubilden.

Durch die Anordnung der Elektronikeinheit axial unmittelbar über dem Elektromotor, kann an einem Ende der Rotorwelle vorteilhaft ein Signalgeber angeordnet werden, der mit einem entsprechenden Sensor der Elektronikeinheit zusammenwirkt. Auf diese Weise kann die Rotorlage von der Elektronikeinheit erfasst werden, beispielsweise um die elektronische Kommutierung des Elektromotors zu steuern oder die Drehgeschwindigkeit der Rotorwelle oder die Position von einem durch die Rotorwelle angetriebenen Teil zu bestimmen. Auf der offenen Seite des Poltopfes ist bevorzugt ein Lagerschild angeordnet, in dem die Rotorwelle beispielsweise mittels eines Wälzlagers gelagert ist. Das Lagerschild ist insbesondere Bestandteil des ersten Gehäuseteils und ist somit aus Kunststoff ausgebildet. Dabei tritt die Rotorwelle durch das Lagerschild hindurch und ragt in das Elektronikgehäuse hinein, wobei der Signalgeber bevorzugt am freien Ende der Rotorwelle angeordnet ist. Besonders günstig ist es, wenn der Signalgeber in Axialrichtung Signale abgibt, die ein axial unmittelbar gegenüberliegendes Sensorelement erfassen kann. Besonders vorteilhaft ist dabei, wenn das Sensorelement direkt auf der Leiterplatte angeordnet ist, wobei dieses beispielsweise die Orientierung eines Magnetfelds erfassen kann. Durch die Anordnung des Elektronikgehäuses an der axial offenen Seite des Poltopfes kann an der gegenüberliegenden Seite des Poltopfes eine Durchgangsöffnung im Boden des Poltopfes ausgebildet werden, durch den die Rotorwelle nach außen ragt. Dadurch kann an dem zweiten freien axialen Ende der Rotorwelle ein Abtriebselement angeformt oder angeordnet werden, das beispielsweise ein bewegliches Teil im Kraftfahrzeug verstellt oder eine Pumpe oder Gebläse antreibt. Durch die metallene Bodenfläche des Poltopfes und die metallene Umfangswand, die insbesondere gleichzeitig den magnetischen Rückschluss für die Statorspulen darstellt, ist die Antriebseinheit zusammen mit den metallenen Gehäusedeckel und den diese vebindenden Kontaktelementen praktisch komplett von einem Faraday'schen Käfig umschlossen. Dadurch kann weder elektromagnetische Störstrahlung aus der Antriebseinheit austreten, noch in diese eindringen.

### Beschreibung der Zeichnungen

Weitere Merkmale der Erfindung ergeben sich aus den weiteren Ausführungen der Beschreibung und der Zeichnung, wie diese in den nachfolgenden Ausführungsbeispielen der Erfindung beschrieben sind. Es zeigt:
- Figur 1: eine erste Ausführung einer erfindungsgemäßen elektrischen Antriebseinheit, und
- Figur 2: eine Detailansicht eines weiteren Ausführungsbeispiels.

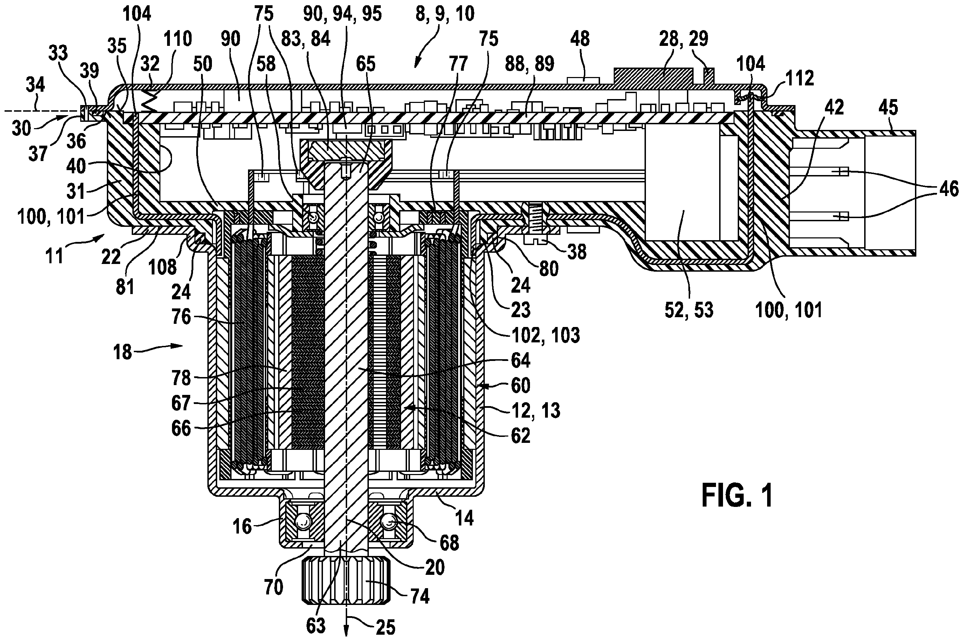

In Figur 1 ist eine elektrische Antriebseinheit 10 dargestellt, die als Elektromotor 9 mit einem Gehäuse 11 ausgebildet ist. In einem Polgehäuse 12 des Gehäuses 11 ist ein mehrere Statorpole aufweisender Stator 60 angeordnet, der mit einem auf einer Rotorachse 20 angeordneten Rotor 62 zusammenwirkt. Der Rotor 62 weist eine Rotorwelle 64 auf, auf der ein Rotorkörper 66 angeordnet ist, der vorzugsweise aus einzelnen Blechlamellen 67 zusammengesetzt ist. Die Rotorwelle 64 ist im Ausführungsbeispiel mittels eines ersten Lagers 68 am Boden 14 des Polgehäuses 12 gelagert. Hierzu weist das Polgehäuse 12 einen axialen Fortsatz 16 auf, der als Lagersitz für das erste Lager 68 ausgebildet ist. Das Polgehäuse 12 ist als Poltopf 13 ausgebildet, der beispielsweise als Tiefziehteil hergestellt ist. Die Rotorwelle 64 ragt mit einem zweiten axialen Ende 63 durch einen Durchbruch 70 des Polgehäuses 12 aus diesem heraus, um ein Drehmoment des Elektromotors 9 auf ein nicht näher dargestelltes Getriebe oder Pumpe oder Gebläse zu übertragen. Dabei ist der Durchbruch 70 am axialen Fortsatz 16 ausgebildet, wobei außerhalb des Polgehäuses 12 an der Rotorwelle 64 ein Abtriebselement 74 angeordnet, beziehungsweise an der Rotorwelle 64 ausgeformt ist. Das Polgehäuse 12 besteht aus Metall und ist optional als magnetischer Rückschluss für die elektromagnetischen Pole des Stators 60 ausgebildet. Bei der Ausbildung des Elektromotors 9 als EC-Motor 8 sind im Stator 60 im radialen äußeren Bereich des Polgehäuses 12 elektrische Spulen 76 auf Statorzähnen angeordnet, die ein Magnetfeld erzeugen, um im Rotor 62 angeordnete Permanentmagnete 78 in Drehung zu versetzen. Das Polgehäuse 12 ist in diesem Ausführungsbeispiel als näherungsweise zylindrischer Poltopf 13 ausgebildet, der axial offen ausgebildet ist. An der axialen Öffnung 80 des Polgehäuses 12 ist ein Lagerschild 50 angeordnet, in dem ein zweites Lager 58 der Rotorwelle 64 befestigt ist. Das Lagerschild 50 ist beispielsweise Bestandteil eines ersten axialen Gehäuseteils 31 eines Elektronikgehäuses 30 aus Kunststoff. Das erste Gehäuseteil 31 ist mit dem Lagerschild 50 am offenen Rand 81 des Polgehäuses 12 axial eingefügt. Durch das zweite Lager 58 hindurch ragt ein, dem Abtriebselement 74 gegenüberliegendes erstes freies Ende 65 der Rotorwelle 64, auf dem ein Signalgeber 83 zur Rotorlageerfassung angeordnet ist. im ersten Gehäuseteil 31 ist eine Verschaltungsvorrichtung 77 angeordnet, die die einzelnen Spulen 76 untereinander verbindet und elektrische Phasenanschlüsse 75 axial aus dem Inneren des Polgehäuses 12 in das Elektronikgehäuse 30 führt. Das Polgehäuse 12 mit dem darin vollständig gelagerten Rotor 62 stellt eine vormontierte Baueinheit 18 dar, an die axial unterschiedliche Gehäusebauteile 31 angeflanscht werden können. Dazu ist am offenen Rand 81 des Polgehäuses 12 ein Flansch 22 angeformt, an dem im Ausführungsbeispiel axial ein Elektronikgehäuse 30 anliegt, das aus dem ersten axialen Gehäuseteil 31 und einem zweiten axialen Gehäuseteil 32 zusammengesetzt ist. Das Polgehäuse 12 und das Elektronikgehäuse 30 bilden zusammen das Gehäuse 11 der Antriebseinheit 10.

Das erste axiale Gehäuseteil 31 liegt axial am Polgehäuse 12 an. Hierzu weist das erste axiale Gehäuseteil 31 eine zylindrische Umfangswand 23 auf, die axial in das Polgehäuse 12 eingreift. Dabei ist am offenen Rand 81 des Polgehäuses 12 eine erste radiale Stufe 108 mit einem axialen Ringbund ausgebildet, gegen den die Umfangswand 23 sich axial abstützt. Zwischen dem axialen Ringbund und der axialen Stirnfläche der Umfangswand 23 ist ein Dichtring 24 angeordnet, der das Polgehäuse 12 gegen das Elektronikgehäuse 30 abdichtet. Der Flansch 22 und die Umfangswand 23 sind näherungsweise kreisförmig ausgebildet, wobei die Grundfläche des ersten axialen Gehäuseteils 31 in der Draufsicht in Figur 1 von oben näherungsweise beispielsweise rechteckig ausgebildet ist, und das Polgehäuse 12 radial überragt. Das erste axiale Gehäuseteil 31 weist an der axial vom Polgehäuse 12 abgewandten Seite eine Montageöffnung 40 auf, die von dem zweiten axialen Gehäuseteil 32 vollständig verschlossen wird. Das bedeutet, dass das Elektronikgehäuse 30 eine Trennebene 34 quer zur Rotorachse 20 aufweist, an dem die beiden axialen Gehäuseteile 31, 32 miteinander verbunden sind. Gemäß der Ausführung in Figur 1 weist hierzu das erste axiale Gehäuseteil 31 axial gegenüberliegend zur Umfangswand 23 eine axiale Anlagefläche 35 auf, die an einer Gegenfläche 36 des zweiten Gehäuseteils 32 anliegt. Zwischen der Anlagefläche 35 und der Gegenfläche 36 ist bevorzugt ein umlaufendes Dichtelement 39 angeordnet. Das zweite Gehäuseteil 32 wird beispielsweise mittels Klemmbügeln 48 mit dem ersten Gehäuseteil 31 verbunden. Zur Zentrierung des zweiten Gehäuseteils 32 gegenüber dem ersten Gehäuseteil 31 sind Zentrierstifte 33 angeordnet, die in entsprechende Zentrieraufnahmen 37 eingreifen. Das erste Gehäuseteil 31 ist bevorzugt mittels Schrauben 38 mit dem Flansch 22 des Polgehäuses 12 verbunden. Die Montageöffnung 40 in der Trennebene 34 ist näherungsweise rechteckig ausgebildet. Die Anlagefläche 35 und die Gegenfläche 36 umschließen die Montageöffnung 40 und sind daher ebenfalls näherungsweise rechteckig ausgebildet. Das erste Gehäuseteil 31 ist Gehäuseteil 32 ist hingegen zur besseren Wärmeabführung aus Aluminium oder aus Stahlblech hergestellt. Beispielsweise wird dieses Aluminium-Gehäuseteil mittels Spritz- oder Druckguss-Verfahren hergestellt. Dabei sind an der Außenwand des zweiten Gehäuseteils 32 Wärmeleitelemente 28 angeformt, die beispielsweise als Kühlrippen 29 oder Kühlnoppen ausgebildet sind. Im ersten Gehäuseteil 31 sind Kontaktelemente 100 integriert, die eine leitfähige Verbindung zwischen dem Polgehäuse 12 und dem zweiten Gehäuseteil aus Metall herstellen. Dazu sind im Ausführungsbeispiel die Kontaktelemente 100 als Einlegeteile 101 ausgebildet, die beim Spritzgießen des ersten Gehäuseteils 31 von diesem umspritzt werden. Die Kontaktelemente 100 sind an einem ersten Ende 102 elektrisch mit dem Polgehäuse 12 verbunden. Dazu sind die ersten Enden 102 als Federkontakt 103 ausgebildet, der als federne Lasche an der Innenwand des Polgehäuses 12 federnd anliegt. Dabei ragt das erste Ende 102 in Axialrichtung 25 aus der Gehäusewand des ersten Gehäuseteils 31 heraus und wird durch die Federkraft radial nach außen gegen die zylindrische Innenwand des Polgehäuses 12 gepresst. Bei der Montage des ersten Gehäuseteils 31 wird hierbei der Federkontakt 103 über eine weitere umlaufende Stufe gedrückt, die dien Federkontakt 103 radial auslenkt. In einer ersten Variante ist ein zweites Ende 104 des Kontaktelements 100 direkt elektrisch mit der Leiterplatte 88 kontaktiert - beispielsweise mittels Löten, Einpressen oder einer Schned-Klemmverbindung. Dazu ragt das zweite Ende 104 ebenfalls aus der Kunststoffwand des ersten Gehäuseteils 31 heraus und beispielsweise in eine Bohrung in der Leiterplatte 88 hinein. An der Leiterplatte 88 ist mindestens eine Kontaktfeder 110 elektrisch kontaktiert, die eine Masseverbindung zu der Innenseite des zweiten Gehäuseteils 32 ausbildet. Dadurch ist die Masseverbindung zwischen dem Polgehäuse 12 und dem zweiten Gehäuseteil 32 über das Kontaktelement 100, die Leiterplatte 88 und die Kontaktfeder 110 vollständig innerhalb des Gehäuses 11 ausgebildet. Bevorzugt sind innerhalb des ersten Gehäuseteils 31 genau drei solcher Kontaktelemente 100 eingefügt, die an drei unterschiedlichen stellen mit der Leiterplatte 88 verbunden sind. Entsprechend sind in unmittelbarer Nähe zu den zweiten Enden 104 der Kontaktelemente 100 genau drei Kontaktfedern 110 elektrisch leitend zwischen der Leiterplatte 88 und der Innenseite des zweiten Gehäuseteils 32 angeordnet.

Auf der rechten Seite der Figur 1 ist eine weitere Variante eines Kontaktelements 100 dargestellt, das das Polgehäuse 12 direkt - insbesondere ohne eine Kontaktierung der Leiterplatte 88 - mit dem zweiten Gehäuseteil 32 elektrisch verbindet. Dabei liegt das erste Ende 102 wieder als Federkontakt 103 a der Innenwand des Polgehäuses 12 an und verläuft innerhalb der Kunststoffwand des ersten Gehäuseteils 31 direkt bis zur Innenseite des zweiten Gehäuseteils 32. Das zweite Ende 104 tritt wiederung aus der Kunststoffwand des ersten Gehäuseteils 31 aus und kontaktiert bei der axialen Montage des zweiten Gehäuseteils 32 dieses unmittelbar. Dabei kann das zweite Ende 104 federnd direkt an der Innenwand des zweiten Gehäuseteils 32 anliegen, oder mittels eines Speednut-Elements 112 kontaktiert sein.

Zur Montage der elektrischen Antriebseinheit 10 wird zuerst die vorgefertigte Baueinheit 18 mit dem ersten axialen Gehäuseteil 31 verbunden, bevorzugt mit diesem verschraubt. Bei der axialen Montage des ersten Gehäuseteils 31 werden gleichzeitig die ersten Enden 102 elektrisch mit dem Polgehäuse 12 kontaktiert. In diesem Zustand kann das erste Gehäuseteil 31 über die Montageöffnung 40 axial mit der Leiterplatte 88 und optional mit weiteren Bauteilen bestückt werden. Bevor das zweite axiale Gehäuseteil 32 axial auf die Montageöffnung 40 des ersten Gehäuseteils 31 aufgesetzt wird, wird die Leiterplatte 88 an der Innenseite des ersten Gehäuseteils 31 befestigt. Alternativ zum Einkleben kann die Leiterplatte 88 auch hart oder weich in das Elektronikgehäuse 30 eingeschraubt oder eingeklipst werden. Zum Schutz vor Erschütterungen kann die Leiterplatte 88 auch schwimmend oder mittels Federelementen dämpfend gelagert werden. Dabei können auch die zweiten Enden 104 der Kontaktelemente 100 mit der Leiterplatte 88 elektrisch verbunden - insbesondere verlötet - werden. Ebenso kann das zweite Gehäuseteil 32, bevor dieses auf das erste Gehäuseteil 31 aufgesetzt wird, mit entsprechenden Bauteilen bestückt werden. Im Ausführungsbeispiel ist am ersten Gehäuseteil 31 ein Anschluss-Stecker 42 zur elektrischen Kontaktierung der Antriebseinheit 10 einstückig angeformt. Der Anschluss-Stecker 42 weist einen Steckerkragen 45 auf, in dem die einzelnen Pins 46 für die Stromversorgung und die Sensorsignale angeordnet sind. Der Steckerkragen 46 steht daber radial nach außen vom ersten Gehäuseteil 31 weg. Im Inneren des Elektronikgehäuses 30 ist an der Leiterplatte 88 ein erstes Entstörelement 52 angeordnet, das beispielsweise eine Entstörkondensator 53 aufweist. Bei der Montage der Leiterplatte 88 im ersten Gehäuseteil 31 wird eine elektrische Verbindung der Phasenanschlüssen 75 und der Pins 46 mit der Leiterplatte 88 hergestellt. Diese elektrische Verbindung kann über das Entstörelement 52 realisiert werden, das beispielsweise einen ELCO und/oder eine Entstördrossel aufweit. Ein erstes Kontaktelement 100 ist bevorzugt in unmittelbarer Nähe zum Anschluss-Stecker 42 und ein zweites Kontaktelement 100 in unmittelbarer Nähe zum Entstörelement 52 angeordnet. Auf der Leiterplatte 88 ist auf der der Baueinheit 18 zugewandten Seite ein Sensorelement 94 angeordnet, das die Signale des Signalgebers 83 auswerten kann. Beispielsweise ist der Signalgeber 83 als Sensormagnet 84 ausgebildet, dessen axiales Magnetfeld von einem als Magnetsensor 95 ausgebildeten Sensorelement 94 detektierbar ist. Dieses kann beispielsweise als GMR- oder GMX-Sensor ausgebildet sein, der direkt die Drehlage des Sensormagneten 84 erfassen kann. Die Elektronikeinheit 89 kann dieses Signal auswerten, um hiermit beispielsweise die elektronische Kommutierung des EC-Motors 8 anzusteuern. Außerdem kann das Drehlagesignal auch für die Bewegung des Abtriebselements 74 für verschiedene Anwendungsfälle genutzt werden.

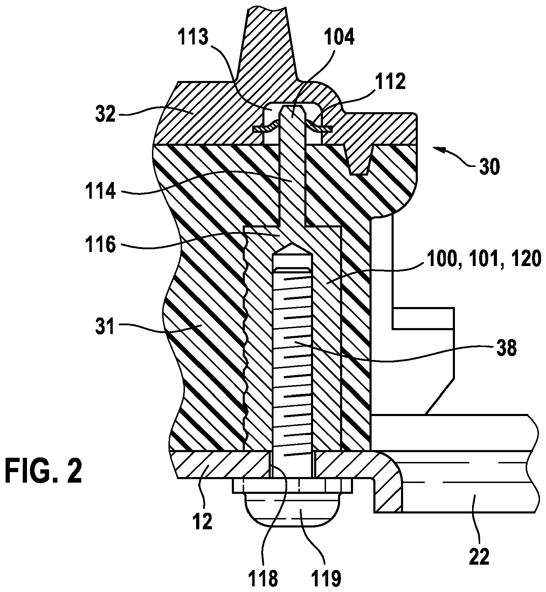

Figur 2 zeigt eine alternative Ausführung, bei der die Kontaktelemente 100 als Gewindehülsen 120 aus Metall ausgebildet sind, die mit der Gehäusewand des ersten Gehäuseteils 31 umspritzt sind. Die gewindehülse 120 ist zylindrisch ausgebildet, wobei die Mantelfläche glatt (rechte Seite) oder strukturiert (linke Seite) ausgebildet sein kann, um einen besseren Formschluss beim Umspritzen zu erzielen. Beim Einschrauben der Schraube 38 in die Gewindehülse 120 zur mechanischen Verbindung des Polgehäuses 12 mit dem ersten Gehäuseteil 31, bildet die Schraube 38 aus Metall gleichzeitig einen elektrischen Kontakt zwischen dem Polgehäuse 12 und der Gewindehülse. Beispielsweise wird die Schraube 38 durch eine Durchgangsöffnung 118 im metallenen Flansch 22 des Polgehäuses 12 durchgeführt, so dass ein Schraubkopf 119 der Schraube 38 unmittelbar kontaktierend am Flansch 22 anliegt. Am Boden 116 der Gewindehülse 120 ist in Axialrichtung ein Kontaktstift 114 angeformt, der das zweite Gehäuseteil 32 aus Metall elektrisch kontaktiert. Dabei liegt der Kontaktstift 114 federnd an der Innenseite des zweiten Gehäuseteils 32 an. Insbesondere wird der elektrische und mechanische Kontakt mittels einem Speetnut-Element 112 gebildet, das an der Innenseite des zweiten Gehäuseteils 32 befestigt ist. Somit hat der Kontaktstift auch die Funktion einer Zentrierung. Somit wird durch diese Ausbildung des Kontaktelements 100 als Gewindehülse 120 eine direkte Masseverbindung zwischen dem Polgehäuse 12 und dem zweiten Gehäuseteil 32 geschaffen. Diese Masseverbindung über das Schraubgewinde ist bevorzugt völlig unabhängig von der Leiterplatte 88.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. Auch kann die Ausführung der beiden Gehäuseteile 31, 32 von einer Rechteckform abweichen, und beispielsweise ebenfalls wie des Polgehäuse 12 rund oder oval ausgebildet sein. Anstelle der Schraubverbindung zwischen dem Polgehäuse 12 und dem ersten Gehäuseteil 31 können auch andere Verbindungstechniken, wie beispielsweise verbördeln, verklinchen, toxen angewandt werden. Je nach Ausführung der Antriebseinheit 10 kann das Elektronikgehäuse 30 unterschiedliche elektronische Funktionsgruppen, wie die Sensorik 94, 83, die Entstörelemente 52, 54 und die EC-Motoransteuerung 90 aufnehmen, wobei immer mindestens die elektrische Kontaktierung der Spulen 76 realisiert sein muss. Die erfinderische Antriebseinheit 10 eignet sich besonders als Ausführung eines EC-Motors 8 zur Verstellung beweglicher Komponenten oder für Rotationsantriebe im Kraftfahrzeug. Dabei kann ein solcher erfindungsgemäßer Elektromotor 9 besonders günstig im Außenbereich, wie beispielsweise im Motorraum eingesetzt werden, wo er extremen Witterungsbedingungen und Erschütterungen ausgesetzt ist.

## Patentansprüche

1. Elektrische Antriebseinheit (10), insbesondere zum Verstellen beweglicher Teile im Kraftfahrzeug, mit einem Gehäuse (11), aufweisend ein metallenes Polgehäuse (12), das einen Stator und einen Rotor (20) aufnimmt, und ein sich axial daran anschließendes Elektronikgehäuse (30), das eine Elektronikeinheit (89) aufnimmt, wobei das Elektronikgehäuse (30) ein erstes axiales Gehäuseteil (31) aus Kunststoff aufweist, dessen axial offene - vom Polgehäuse (12) abgewandte - Seite (40) von einem zweiten axialen Gehäuseteil (32) aus Metall verschlossen ist,
wobei im Inneren einer Kunsttoffwand des ersten axialen Gehäuseteils (31) Kontaktelemente (100) integriert sind, die eine elektrisch leitende Verbindung zwischen dem Polgehäuse (12) und dem zweiten axialen Gehäuseteil (32) bilden, um eine Masseverbindung herzustellen,
**dadurch gekennzeichnet, dass** im ersten Gehäuseteil (31) als Elektronikeinheit (89) eine Leiterplatte (88) angeordnet ist, und mindestens ein Kontaktelement (100) die Leiterplatte (88) mit dem Polgehäuse (12) leitend verbindet, und die Leiterplatte (88) auch mit dem zweiten Gehäuseteil (32) leitend verbunden ist,
wobei das Kontaktelement (100) das Polgehäuse (12) direkt mit der Leiterplatte (88) leitend verbindet - und mittels Löten oder Schweißen oder Bonden oder mittels einer Pressfit-Verbindung mit der Leiterplatte (88) kontaktiert ist,
wobei die Leiterplatte (88) mit einer leitenden Kontaktfeder (110) bestückt ist, die bei der axialen Montage des zweiten Gehäuseteils (32) einen Massekontakt zu diesem erzeugt.

2. Elektrische Antriebseinheit (10) nach Anspruch 1, **dadurch gekennzeichnet, dass** die Kontaktelemente (100) als Einlegeteile (101) in das erste Gehäuseteil (31) eingefügt oder von dem ersten Gehäuseteil (31) umspritzt sind.

3. Elektrische Antriebseinheit (10) nach Anspruch 1 oder 2, **dadurch gekennzeichnet, dass** die Masseverbindung zwischen dem Polgehäuse (12) und dem zweiten Gehäuseteil (32) über das Kontaktelement (100), die Leiterplatte (88) und die Kontaktfeder (110) vollständig innerhalb des Gehäuses (11) ausgebildet ist.

4. Elektrische Antriebseinheit (10) nach einem der vorherigen Ansprüche, **dadurch gekennzeichnet, dass** mindestens ein weiteres Kontaktelement (100) das Polgehäuse (12) direkt mit dem zweiten Gehäuseteil (32) leitend verbindet - ohne dabei elektrische oder elektronische Bauteile (88, 90) elektrisch zu kontaktieren.

5. Elektrische Antriebseinheit (10) nach einem der vorherigen Ansprüche, **dadurch gekennzeichnet, dass** das Kontaktelement (100) mittels Löten oder Schweißen oder Bonden oder mittels einer Pressfit-Verbindung oder einem Federkontakt mit dem Polgehäuse (12) kontaktiert ist.

6. Elektrische Antriebseinheit (10) nach einem der vorherigen Ansprüche, **dadurch gekennzeichnet, dass** das Kontaktelement (100) als Federkontakt (103) eine elastische axiale Lasche aufweist, die bei der axialen Montage des ersten Gehäuseteils (31) in das Polgehäuse (12) federnd an der Innenwand des Polgehäuses (12) anliegt.

7. Elektrische Antriebseinheit (10) nach einem der Ansprüche 1-3, 5, 6, J **dadurch gekennzeichnet, dass** innerhalb des ersten Gehäuseteils (31) genau drei Kontaktelemente (100) eingefügt sind, die an drei unterschiedlichen Stellen mit der Leiterplatte (88) verbunden sind.

8. Elektrische Antriebseinheit (10) nach einem der vorherigen Ansprüche, **dadurch gekennzeichnet, dass** das Kontaktelement (100) einen Zentrierpin (114) aufweist, der in eine korrespondierende Zentrieraufnahme (112) in der Leiterplatte (88) oder im zweiten Gehäuseteil (32) eingreift, wobei insbesondere der Zentrierpin (114) gleichzeitig einen elektrisch leitenden Kontakt mit der Zentrieraufnahme (113) ausbildet.

9. Elektrische Antriebseinheit (10) nach einem der vorherigen Ansprüche, **dadurch gekennzeichnet, dass** das Kontaktelement (100) als metallene Gewindehülse (120) ausgebildet ist, die im ersten Gehäuseteil (31) eingespritzt ist, wobei eine Metallschraube (38), mit der das Polgehäuse (12) am ersten Gehäuseteil (31) befestigt ist, gleichzeitig den elektrisch leitenden Kontakt zwischen dem Polgehäuse (12) und dem ersten Gehäuseteil (31) bildet.

10. Elektrische Antriebseinheit (10) nach Anspruch 9, **dadurch gekennzeichnet, dass** am Boden (116) der Gewindehülse (120) ein Kontaktstift angeformt ist, der bei der axialen Montage des zweiten Gehäuseteils (32) einen Massekontakt zu diesem ausbildet - und insbesondere gleichzeitig als Zentrierpin (114) ausgebildet ist, der in eine korrespondierende Zentrieraufnahme (112) eingreift.

11. Elektrische Antriebseinheit (10) nach einem der Ansprüche 9, 10, **dadurch gekennzeichnet, dass** am offenen Ende (80) des Polgehäuses (12) ein Flansch (22) angeformt ist, der Durchgangsbohrungen (118) für die Schrauben (38) aufweist, die mit einem Schraubkopf (119) am Flansch (22) anliegen und durch die Durchgangsbohrung (118) in die Gewindehülse (120) eingeschraubt sind, um somit einen leitenden Kontakt zwischen dem Polgehäuse (12) und dem zweiten Gehäuseteil (32) auszubilden.

12. Elektrische Antriebseinheit (10) nach Anspruch 8, **dadurch gekennzeichnet, dass** die Zentrieraufnahme (113) ein Speednut-Element (112) aufweist, um den Zentrierpin (114) mechanisch stabil und elektrisch leitend aufzunehmen.

13. Elektrische Antriebseinheit (10) nach einem der vorherigen Ansprüche, **dadurch gekennzeichnet, dass** das erste Gehäuseteil (31) einen sich quer zur Rotorwelle (20) erstreckenden Anschluss-Stecker (42) aufweist, und das zweite Gehäuseteil (32) als Gehäusedeckel ausgebildet ist, der aus Aluminium - insbesondere als Spritzguss-Teil mit angeformten Wärmeleitelementen (28, 29) - oder als tiefgezogenes Stahlblech hergestellt ist.

14. Elektrische Antriebseinheit (10) nach Anspruch 11, **dadurch gekennzeichnet, dass** am offenen Flansch (22) des Polgehäuses (12) eine erste radiale Stufe (108) ausgeformt ist, in die eine zylindrischer Umfangswand (23) des ersten Gehäuseteils (31) axial eingreift, und vorzugsweise eine zweite radiale Stufe am Polgehäuse (12) angeformt ist, an deren radialer Innenwand der Federkontakt (103) des Kontaktelements (100) federnd anliegt.

15. Elektrische Antriebseinheit (10) nach einem der vorherigen Ansprüche, **dadurch gekennzeichnet, dass** im Polgehäuse (12) elektrische Spulen (76) zum Antrieb des Rotors (62) angeordnet sind, der auf einer Rotorwelle (64) entlang der Rotorachse (20) gelagert ist, und an einem axialen Ende (65) der Rotorwelle (64) ein Signalgeber (83) angeordnet ist, der mit einer Drehlagen-Sensorik (94) der Elektronikeinheit (89) zusammenwirkt, wobei das axiale Ende (65) der Rotorwelle (64) durch ein Lagerschild (50) für den Rotor (62) hindurch axial in das Elektronikgehäuse (30) ragt - und insbesondere an der dem Elektronikgehäuse (30) abgewandten Seite des Polgehäuses (12) eine Durchgangsöffnung (70) ausgebildet ist, durch die ein ein Abtriebselement (74) aufweisendes zweites Ende (63) der Rotorwelle (64) aus dem Polgehäuse (12) ragt.

## Claims

1. Electrical drive unit (10), in particular for adjusting movable parts in a motor vehicle, comprising a housing (11), having a metal pole housing (12) which accommodates a stator and a rotor (20) and having an electronics housing (30) which axially adjoins the said pole housing and accommodates an electronics unit (89), wherein the electronics housing (30) has a first axial housing part (31) composed of plastic, the axially open side (40) - facing away from the pole housing (12) - of the said first axial housing part being closed by a second axial housing part (32) composed of metal, wherein contact elements (100) are integrated in the interior of a plastic wall of the first axial housing part (31), the said contact elements forming an electrically conductive connection between the pole housing (12) and the second axial housing part (32) in order to establish an earth connection, **characterized in that** a printed circuit board (88) is arranged in the first housing part (31) as the electronics unit (89), and at least one contact element (100) conductively connects the printed circuit board (88) to the pole housing (12), and the printed circuit board (88) is also conductively connected to the second housing part (32), wherein the contact element (100) conductively connects the pole housing (12) directly to the printed circuit board (88) - and is contact-connected to the printed circuit board (88) by means of soldering or welding or bonding or by means of a press-fit connection, wherein the printed circuit board (88) is fitted with a conductive contact spring (110) which, during the axial mounting of the second housing part (32), generates an earth contact to the said second housing part.

2. Electrical drive unit (10) according to Claim 1, **characterized in that** the contact elements (100) are inserted into the first housing part (31) as insert parts (101) or are encapsulated by the first housing part (31) by injection moulding.

3. Electrical drive unit (10) according to Claim 1 or 2, **characterized in that** the earth connection between the pole housing (12) and the second housing part (32) is formed completely within the housing (11) via the contact element (100), the printed circuit board (88) and the contact spring (110).

4. Electrical drive unit (10) according to one of the preceding claims, **characterized in that** at least one further contact element (100) conductively connects the pole housing (12) directly to the second housing part (32) - without making electrical contact with electrical or electronic components (88, 90) in the process.

5. Electrical drive unit (10) according to one of the preceding claims, **characterized in that** the contact element (100) is contact-connected to the pole housing (12) by means of soldering or welding or bonding or by means of a press-fit connection or a spring contact.

6. Electrical drive unit (10) according to one of the preceding claims, **characterized in that** the contact element (100) has an elastic axial tab as the spring contact (103), the elastic axial tab bearing with a spring action against the inner wall of the pole housing (12) during the axial mounting of the first housing part (31) into the pole housing (12).

7. Electrical drive unit (10) according to one of Claims 1-3, 5 and 6, **characterized in that** precisely three contact elements (100) are inserted within the first housing part (31), the three contact elements being connected to the printed circuit board (88) at three different points.

8. Electrical drive unit (10) according to one of the preceding claims, **characterized in that** the contact element (100) has a centring pin (114) which engages into a corresponding centring receptacle (112) in the printed circuit board (88) or in the second housing part (32), wherein in particular the centring pen (114) at the same time forms electrically conductive contact with the centring receptacle (113).

9. Electrical drive unit (10) according to one of the preceding claims, **characterized in that** the contact element (100) is designed as a metal threaded sleeve (120) which is injection-moulded into the first housing part (31), wherein a metal screw (38), by way of which the pole housing (12) is fastened to the first housing part (31), at the same time forms the electrically conductive contact between the pole housing (12) and the first housing part (31).

10. Electrical drive unit (10) according to Claim 9, **characterized in that** a contact pin is integrally formed on the base (116) of the threaded sleeve (120), the contact pin, during the axial mounting of the second housing part (32), forming an earth contact to the said second housing part - and in particular at the same time being designed as a centring pin (114) which engages into a corresponding centring receptacle (112).

11. Electrical drive unit (10) according to either of Claims 9 and 10, **characterized in that** a flange (22) is integrally formed on the open end (80) of the pole housing (12), the flange having passage bores (118) for the screws (38) which, by way of a screw head (119), bear against the flange (22) and are screwed into the threaded sleeve (120) through the passage bore (118) in order to thereby form conductive contact between the pole housing (12) and the second housing part (32).

12. Electrical drive unit (10) according to Claim 8, **characterized in that** the centring receptacle (113) has a speednut element (112) in order to receive the centring pin (114) in a mechanically stable and electrically conductive manner.

13. Electrical drive unit (10) according to one of the preceding claims, **characterized in that** the first housing part (31) has a connection plug (42) which extends transversely to the rotor shaft (20), and the second housing part (32) is designed as a housing cover which is produced from aluminium - in particular as an injection-moulded part with integrally formed thermally conductive elements (28, 29) - or as a deep-drawn steel sheet.

14. Electrical drive unit (10) according to Claim 11, **characterized in that** a first radial step (108) is formed on the open flange (22) of the pole housing (12), a cylindrical circumferential wall (23) of the first housing part (31) axially engaging into the said first radial step, and a second radial step is preferably integrally formed on the pole housing (12), the spring contact (103) of the contact element (100) bearing with a spring action against the radial inner wall of the said second radial step.

15. Electrical drive unit (10) according to one of the preceding claims, **characterized in that** electrical coils (76) for driving the rotor (62) which is mounted on a rotor shaft (64) along the rotor axis (20) are arranged in the pole housing (12) and a signal transmitter (83) which interacts with a rotation position sensor system (94) of the electronics unit (89) is arranged at an axial end (65) of the rotor shaft (64), wherein the axial end (65) of the rotor shaft (64) axially projects through an end shield (50) for the rotor (62) into the electronics housing (30) - and in particular a passage opening (70) is formed on that side of the pole housing (12) which faces away from the electronics housing (30), a second end (63) of the rotor shaft (64), which second end has an output element (74), projecting out of the pole housing (12) through the said passage opening.

## Revendications

1. Unité d'entraînement électrique (10), en particulier pour régler des pièces mobiles dans un véhicule automobile, comportant un carter (11), présentant une carcasse polaire métallique (12) recevant un stator et un rotor (20), et un boîtier électronique (30) axialement adjacent à celle-ci et qui reçoit une unité électronique (89), le boîtier électronique (30) présentant une première partie de boîtier axiale (31) en matière plastique dont le côté (40) axialement ouvert, détourné de la carcasse polaire (12), est fermé par une deuxième partie de boîtier axiale (32) en métal,
dans laquelle, à l'intérieur d'une paroi en matière plastique de la première partie de boîtier axiale (31), des éléments de contact (100) sont intégrés qui constituent une liaison électriquement conductrice entre la carcasse polaire (12) et la deuxième partie de boîtier axiale (32) pour établir une prise de terre,
**caractérisée en ce que** dans la première partie de boîtier (31) une carte de circuits imprimés (88) est disposée en tant qu'unité électronique (89), et au moins un élément de contact (100) relie de manière conductrice la carte de circuits imprimés (88) à la carcasse polaire (12), et la carte de circuits imprimés (88) est aussi reliée de manière conductrice à la deuxième partie de boîtier (32),
l'élément de contact (100) reliant de manière conductrice la carcasse polaire (12) directement à la carte de circuits imprimés (88), et étant mis en contact avec la carte de circuits imprimés (88) par brasage ou soudage ou métallisation ou par ajustement serré,
la carte de circuits imprimés (88) étant équipée d'un ressort de contact conducteur (110) qui, lors du montage axial de la deuxième partie de boîtier (32), génère un contact de terre avec celle-ci.

2. Unité d'entraînement électrique (10) selon la revendication 1, **caractérisée en ce que** les éléments de contact (100) sont insérés sous forme de pièces d'insertion (101) dans la première partie de boîtier (31) ou sont enrobés par la première partie de boîtier (31).

3. Unité d'entraînement électrique (10) selon la revendication 1 ou 2, **caractérisée en ce que** la prise de terre entre la carcasse polaire (12) et la deuxième partie de boîtier (32) est réalisée entièrement à l'intérieur du boîtier (11) en passant par l'élément de contact (100), la carte de circuits imprimés (88) et le ressort de contact (110).

4. Unité d'entraînement électrique (10) selon l'une quelconque des revendications précédentes, **caractérisée en ce qu'**au moins un élément de contact supplémentaire (100) relie de manière conductrice la carcasse polaire (12) directement à la deuxième partie de boîtier (32), sans pour autant mettre en contact électrique des composants électriques ou électroniques (88, 90).

5. Unité d'entraînement électrique (10) selon l'une quelconque des revendications précédentes, **caractérisée en ce que** l'élément de contact (100) est mis en contact avec la carcasse polaire (12) par brasage ou soudage ou métallisation ou par ajustement serré ou contact à ressort.

6. Unité d'entraînement électrique (10) selon l'une quelconque des revendications précédentes, **caractérisée en ce que** l'élément de contact (100) présente comme contact à ressort (103) une patte axiale élastique qui s'applique de manière élastique contre la paroi intérieure de la carcasse polaire (12) lors du montage axial de la première partie de boîtier (31) dans la carcasse polaire (12).

7. Unité d'entraînement électrique (10) selon l'une quelconque des revendications 1 à 3, 5, 6, **caractérisée en ce qu'**à l'intérieur de la première partie de boîtier (31), exactement trois éléments de contact (100) sont introduits qui sont reliés à la carte de circuits imprimés (88) en trois points différents.

8. Unité d'entraînement électrique (10) selon l'une quelconque des revendications précédentes, **caractérisée en ce que** l'élément de contact (100) présente une broche de centrage (114) qui vient en prise dans un logement de centrage (112) correspondant dans la carte de circuits imprimés (88) ou dans la deuxième partie de boîtier (32), la broche de centrage (114) réalisant en particulier en même temps un contact électriquement conducteur avec le logement de centrage (113).

9. Unité d'entraînement électrique (10) selon l'une quelconque des revendications précédentes, **caractérisée en ce que** l'élément de contact (100) est réalisé sous forme de douille filetée métallique (120) qui est injectée dans la première partie de boîtier (31), une vis métallique (38) par laquelle la carcasse polaire (12) est fixée à la première partie de boîtier (31) établissant en même temps le contact électriquement conducteur entre la carcasse polaire (12) et la première partie de boîtier (31) .

10. Unité d'entraînement électrique (10) selon la revendication 9, **caractérisée en ce que** sur le fond (116) de la douille filetée (120), une broche de contact est rapportée qui, lors du montage axial de la deuxième partie de boîtier (32), réalise un contact de terre avec celle-ci, et qui est en particulier en même temps réalisé sous la forme d'une broche de centrage (114) qui vient en prise dans un logement de centrage (112) correspondant.

11. Unité d'entraînement électrique (10) selon l'une quelconque des revendications 9, 10, **caractérisée en ce qu'**à l'extrémité ouverte (80) de la carcasse polaire (12), une bride (22) est rapportée qui présente des trous traversants (118) pour les vis (38) qui s'appliquent par une tête de vis (119) contre la bride (22) et sont vissées à travers le trou traversant (118) dans la douille filetée (120) afin de réaliser ainsi un contact conducteur entre la carcasse polaire (12) et la deuxième partie de boîtier (32).

12. Unité d'entraînement électrique (10) selon la revendication 8, **caractérisée en ce que** le logement de centrage (113) présente un élément à écrou rapide (112) afin de recevoir la broche de centrage (114) de manière mécaniquement stable et électriquement conductrice.

13. Unité d'entraînement électrique (10) selon l'une quelconque des revendications précédentes, **caractérisée en ce que** la première partie de boîtier (31) présente un connecteur de raccordement (42) s'étendant transversalement à l'arbre de rotor (20), et **en ce que** la deuxième partie de boîtier (32) est réalisée sous la forme d'un couvercle de boîtier qui est fabriqué en aluminium, en particulier sous la forme d'une pièce moulée par injection avec des éléments thermoconducteurs rapportés (28, 29), ou sous la forme d'une tôle d'acier emboutie.

14. Unité d'entraînement électrique (10) selon la revendication 11, **caractérisée en ce qu'**au niveau de la bride ouverte (22) de la carcasse polaire (12), un premier gradin radial (108) est façonné dans lequel une paroi circonférentielle cylindrique (23) de la première partie de boîtier (31) vient en prise axialement, et de préférence un deuxième gradin radial est rapporté à la carcasse polaire (12), contre la paroi intérieure radiale duquel s'applique de manière élastique le contact à ressort (103) de l'élément de contact (100).

15. Unité d'entraînement électrique (10) selon l'une quelconque des revendications précédentes, **caractérisée en ce que** dans la carcasse polaire (12), des bobines électriques (76) sont disposées pour l'entraînement du rotor (62) qui est monté sur un arbre de rotor (64) le long de l'axe de rotor (20), et à une extrémité axiale (65) de l'arbre de rotor (64), un émetteur de signal (83) est disposé qui coopère avec un système de capteurs de position de rotation (94) de l'unité électronique (89), dans laquelle l'extrémité axiale (65) de l'arbre de rotor (64) fait saillie dans le boîtier électronique (30) à travers un flasque (50) pour le rotor (62), et en particulier sur le côté, détourné du boîtier électronique (30), de la carcasse polaire (12), une ouverture traversante (70) est réalisée à travers laquelle une extrémité (63) présentant un élément d'entraînement (74) de l'arbre de rotor (64) dépasse de la carcasse polaire (12) .
